# FASCICULE DE BREVET EUROPEEN

(11) **EP 1 492 392 B1**
(45) Date de publication et mention de la délivrance du brevet: **05.01.2011**
(21) Numéro de dépôt: 04291501.7
(22) Date de dépôt: 15.06.2004
(51) Int. Cl.: H05B 37/02, H05B 39/04, H02M 5/293

(54) **Appareil de variation de la puissance moyenne d'alimentation d'une charge en courant alternatif**
Dimmer basierend auf einem Wechselstrom Schalter
Dimmer based on an AC switch

(30) Priorité: 16.06.2003 FR 0307212
(43) Date de publication de la demande: 29.12.2004
(73) Titulaire: Legrand France, 87000 Limoges (FR); Legrand SNC, 87000 Limoges (FR)
(72) Inventeur: Delaporte, Alain, 87220 Aureil (FR)
(74) Mandataire: Lepelletier-Beaufond, François

(56) Documents cités:
- EP-A- 0 535 289
- GB-A- 2 348 749
- US-A- 5 004 969
- US-A- 5 319 301
- US-A1- 2001 014 949
- US-A1- 2002 079 849

## Description

L'invention a trait aux appareils de variation de la puissance moyenne d'alimentation d'une charge en courant alternatif tels qu'un variateur de lumière.

On sait que l'étage de puissance de ce genre d'appareil est classiquement réalisé avec un organe de commutation électronique bidirectionnel tel qu'un triac, lequel étage est commandé par un circuit de pilotage pour qu'il soit passant pendant une partie de chaque demi-onde de tension et bloqué pendant le reste de celle-ci, avec bien entendu la puissance moyenne d'alimentation qui est d'autant plus élevée que l'étage de conduction reste passant plus longtemps.

L'alimentation en courant continu du circuit de pilotage d'un tel étage de puissance est en général réalisée en prenant comme potentiel de référence celui de l'une des bornes de l'étage de puissance.

Lorsqu'on souhaite commander à distance un tel appareil, il est connu de rajouter aux deux bornes principales entre lesquelles se trouve l'étage de puissance, une borne de commande à distance et de disposer dans l'installation dont fait partie l'appareil, à distance de celui-ci, un bouton-poussoir dont une borne est reliée par un câble spécifique à la borne de commande à distance et dont l'autre borne est reliée à celle des bornes principales qui forme le potentiel de référence de l'alimentation en courant continu du circuit de pilotage de l'appareil, laquelle liaison s'effectue par l'intermédiaire du câble de puissance auquel est connectée cette borne principale pour être reliée soit au pôle de phase du réseau électrique d'alimentation, soit à l'une des bornes de la charge.

Dans l'appareil, il est prévu une résistance entre la borne de commande à distance et un pôle de l'alimentation en courant continu porté à un potentiel présentant un écart prédéterminé par rapport au potentiel de référence.

Ainsi, entre la borne principale portée au potentiel de référence et ce pôle de l'alimentation en courant continu, il existe un circuit dans lequel se trouvent en série le bouton-poussoir et la résistance.

Par conséquent, en l'absence de perturbations sur les câbles reliant le bouton-poussoir à l'appareil, la tension aux bornes de la résistance est nulle lorsque le bouton-poussoir est ouvert, c'est-à-dire lorsqu'aucune liaison n'est établie entre ces deux bornes, tandis que quand le bouton-poussoir est fermé, c'est-à-dire quand il relie ces deux bornes, la tension existant entre le potentiel de référence et le pôle susmentionné de l'alimentation en courant continu apparaît aux bornes de la résistance.

En pratique, les deux câbles reliant le bouton-poussoir à l'appareil cheminent souvent côte à côte dans l'installation et sont susceptibles de présenter entre eux une capacité de couplage pouvant prendre des valeurs élevées.

Dans un tel cas, lorsque le bouton-poussoir est ouvert, il se produit aux bornes de la résistance des variations de tension à la fréquence du réseau d'alimentation.

Cela n'est toutefois pas gênant pour effectuer la discrimination entre les moments où le bouton-poussoir est à l'état ouvert et ceux où il est à l'état fermé, puisque c'est seulement quand le bouton-poussoir est à l'état fermé qu'il existe en permanence une tension entre les bornes de la résistance (quand le bouton-poussoir est à l'état ouvert, soit la tension est nulle, soit elle est intermittente).

En outre des appareils mentionnés ci-dessus, on connaît également d'autres appareils de variation de la puissance moyenne d'alimentation d'une charge dans lesquels l'étage de puissance n'est pas réalisé avec un organe de commutation bi-directionnel, mais avec deux organes de commutation distincts tels que des transistors MOSFET ou IGBT, c'est-à-dire commandables pour autoriser, dans un état conducteur, une circulation de courant d'une première borne de puissance vers une seconde borne de puissance et pour interdire, dans un état bloqué, une telle circulation de courant, alors qu'un tel organe autorise, sans avoir à être commandé, une circulation de courant de sa seconde borne de puissance vers sa première borne de puissance.

Dans l'étage de puissance, les deux organes de commutation sont disposés en série inverse, c'est-à-dire avec une des bornes principales de l'étage de puissance qui est reliée à la première borne de puissance de l'un des organes, l'autre borne principale qui est reliée à la première borne de puissance de l'autre organe et les deuxièmes bornes de puissance des deux organes qui sont reliées l'une à l'autre.

Le circuit de pilotage commande l'un des organes de commutation pendant les demi-ondes de tension positives et commande l'autre organe de commutation pendant les demi-ondes de tension négatives.

L'on prend alors le potentiel des deuxièmes bornes des organes de puissance comme potentiel de référence de l'alimentation en courant continu du circuit de pilotage.

De tels appareils ne sont pas compatibles avec la technique de commande à distance connue pour les appareils où l'étage de puissance est un organe de commutation bi-directionnel, puisqu'aucune des bornes principales de l'étage de puissance n'est en permanence au potentiel de référence de l'alimentation en courant continu.

L'invention vise un appareil de variation de la puissance d'alimentation d'une charge dans lequel l'étage de puissance est du type à deux organes de commutation montés en série inverse et qui soit capable d'être commandé à distance grâce à une seule borne venant en supplément des deux bornes de l'étage de puissance.

Elle propose à cet effet un appareil de variation de la puissance moyenne d'alimentation d'une charge en courant alternatif, comportant une première borne principale, une seconde borne principale, un étage de puissance disposé entre ladite première borne principale et ladite seconde borne principale ainsi qu'un circuit de pilotage dudit étage de puissance, lequel étage de puissance comporte un premier organe de commutation électronique et un second organe de commutation électronique comportant chacun une première borne de puissance et une seconde borne de puissance, chaque dit premier organe de commutation électronique et second organe de commutation électronique étant commandable pour autoriser, dans un état conducteur, une circulation de courant de sa première borne de puissance vers sa seconde borne de puissance et pour interdire, dans un état bloqué, une telle circulation de courant, chaque dit premier organe de commutation électronique et second organe de commutation électronique autorisant, sans avoir à être commandé, une circulation de courant de sa seconde borne de puissance vers sa première borne de puissance, la première borne de puissance du premier organe de commutation et ladite première borne principale étant reliées l'une à l'autre, la première borne de puissance du second organe de commutation et ladite seconde borne principale étant reliées l'une à l'autre tandis que la seconde borne de puissance du premier organe de commutation et la seconde borne de puissance du second organe de commutation sont reliées l'une à l'autre ; appareil caractérisé en ce qu'il comporte en outre une borne de commande à distance tandis que ledit circuit de pilotage comporte un circuit de détection comportant une première borne reliée à ladite borne de commande, une deuxième borne reliée à ladite seconde borne de puissance du premier organe de commutation et à ladite seconde borne de puissance du second organe de commutation, des composants, comportant au moins une résistance, disposés entre ladite première borne et ladite deuxième borne, et une troisième borne reliée auxdits composants pour que la tension entre la troisième borne et la deuxième borne reflète la tension aux bornes de ladite résistance, lesquels composants, sans avoir à être commandés autorisent une circulation de courant de la première borne vers la deuxième borne tandis qu'ils interdisent une circulation de courant de la deuxième borne vers la première borne, avec ledit circuit de pilotage qui fait prendre audit premier organe de commutation ledit état bloqué à chaque demi-onde de tension où le potentiel de la première borne principale est plus élevé que le potentiel de la seconde borne principale, grâce à quoi la tension entre la troisième borne et la deuxième borne prend un premier état dans une première configuration où ladite borne de commande n'est pas reliée à la première borne principale et prend un deuxième état distinct du premier état dans une seconde configuration où ladite borne de commande est reliée à la première borne principale.

La résistance du circuit de détection est disposée entre la borne de commande à distance et le potentiel de référence de l'alimentation en courant continu.

En l'absence de perturbations, la tension aux bornes de cette résistance serait nulle lorsque la première borne principale et la borne de commande à distance ne sont pas reliées l'une à l'autre et correspondraient à la tension entre la première borne de puissance et la seconde borne de puissance du premier organe de commutation électronique lorsque la première borne principale et la borne de commande à distance sont reliées l'une à l'autre.

Du fait que le circuit de pilotage fait prendre au premier organe de commutation l'état bloqué à chaque demi-onde de tension où le potentiel de la première borne principale est plus élevé que le potentiel de la seconde borne principale, et du fait que dans un tel état bloqué, la tension du réseau apparaît entre la première borne de puissance et la seconde borne de puissance du premier organe de commutation, il résulte que la tension aux bornes de la résistance du circuit de détection resterait nulle lorsque la première borne principale et la borne de commande à distance ne sont pas reliées l'une à l'autre tandis que quand ces bornes sont reliées l'une à l'autre, la tension du réseau apparaît à chaque fois que le premier organe de commutation est bloqué.

Ainsi, la tension aux bornes de la résistance prendrait soit un premier état où elle est nulle, soit un deuxième état où la tension à ses bornes varie par intermittence à la fréquence du réseau.

En pratique, l'organe de commande à distance reliant ou non la première borne principale et la borne de commande à distance est prévu pour être un interrupteur (et non avec un bouton-poussoir, comme on l'expliquera ci-après) relié aux bornes en question par des câbles susceptibles de cheminer côte à côte, et donc de présenter entre eux une capacité de couplage pouvant prendre une valeur relativement élevée.

Dans un tel cas, du fait de cette capacité de couplage, il existerait, en outre, des variations de tension importantes aux bornes de la résistance lorsque l'interrupteur externe est à l'état ouvert, à chaque fois que le premier organe de commutation passe de l'état conducteur à l'état bloqué.

Il pourrait en résulter, notamment dans le cas particulièrement défavorable où l'appareil est à pleine puissance, et donc où le premier organe de commutation est à l'état bloqué pendant une durée extrêmement courte, qu'on ne pourrait que difficilement, voire pas du tout, distinguer entre la configuration où l'interrupteur distant est à l'état ouvert et la configuration où cet interrupteur est à l'état fermé.

Cependant, les composants du circuit de détection de l'appareil selon l'invention ne se limitent pas à la seule résistance, mais complètent celle-ci pour qu'une circulation de courant soit autorisée de la première borne vers la deuxième borne de ce circuit tandis qu'est interdite une circulation de courant en sens inverse.

Cela évite au condensateur de couplage, après s'être chargé pendant que le premier organe de commutation est à l'état bloqué jusqu'à ce que la tension existant alors entre la première borne principale et la deuxième borne principale prenne une valeur de crête, de se décharger lorsqu'ensuite la tension entre ces bornes diminue puis s'annule, et plus généralement lui évite de subir ensuite un cycle de charge/décharge à chaque fois que le premier organe de commutation passe de l'état conducteur à l'état bloqué.

Il en résulte que la tension aux bornes de la résistance reste nulle lorsque l'interrupteur externe est à l'état ouvert, et permet donc de bien faire la distinction entre la configuration où cet interrupteur est ouvert et celle où il est fermé.

Il est ainsi possible de disposer l'interrupteur externe à une distance particulièrement élevée de l'appareil, par exemple supérieure à 50 m.

On notera que dans les appareils antérieurs susmentionnés, ce que l'on détecte est la permanence aux bornes de la résistance d'une tension en courant continu provenant de l'alimentation du circuit de pilotage tandis que dans l'appareil selon l'invention, ce que l'on détecte est la permanence de l'apparition par intermittence de la tension du réseau aux bornes de la résistance.

Pour s'assurer que l'apparition par intermittence de la tension du réseau est bien permanente, il faut analyser le signal pendant une durée relativement élevée, par exemple de 40 ms. C'est pour cette raison qu'il est préférable d'employer avec l'appareil selon l'invention un interrupteur plutôt qu'un bouton-poussoir.

Selon des caractéristiques préférées, en raison de la simplicité et de la commodité de mise en oeuvre qu'elles offrent, ainsi qu'en raison de la qualité des résultats obtenus :
- ledit circuit de détection comporte une diode dont l'anode est du côté de ladite première borne et la cathode du côté de ladite deuxième borne ; et éventuellement
- ledit circuit de détection comporte une diode et un condensateur avec l'anode de ladite diode qui est reliée à ladite première borne et ledit condensateur qui est disposé entre la cathode de ladite diode et ladite deuxième borne ; et éventuellement
- ladite résistance et ledit condensateur sont disposés en parallèle entre la cathode de ladite diode et ladite deuxième borne tandis que ladite troisième borne est reliée à la cathode de ladite diode ; ou bien
- lesdits composants comportent, en outre de ladite diode, dudit condensateur et de ladite résistance, des éléments de mise en forme pour que ledit premier état et ledit deuxième état de la tension entre la troisième borne et la deuxième borne correspondent chacun à un niveau de tension prédéterminé ; et éventuellement
- ladite résistance est formée par une première résistance dont un premier côté est relié à la cathode de ladite diode et par une seconde résistance dont un premier côté est relié au deuxième côté de la première résistance et dont un deuxième côté est relié à ladite deuxième borne ; tandis que lesdits éléments de mise en forme comportent un organe de commutation électronique dont une borne de commande est reliée au deuxième côté de ladite première résistance et donc au premier côté de ladite seconde résistance; et éventuellement
- lesdits éléments de mise en forme comportent, en outre d'un premier organe de commutation électronique dont une borne de commande est reliée au deuxième côté de la première résistance et donc au premier côté de la seconde résistance, un deuxième organe de commutation électronique dont une borne de commande est reliée à une borne de puissance dudit premier organe de commutation électronique ; et éventuellement
- lesdits éléments de mise en forme comportent un condensateur et une résistance disposés en parallèle entre ladite borne de commande du deuxième organe de commutation électronique et ladite deuxième borne dudit circuit de détection ; et éventuellement
- ledit premier organe de commutation électronique du circuit de détection comporte une seconde borne de puissance reliée à une quatrième borne dudit circuit de détection, prévue pour être raccordée à un premier pôle positif d'une alimentation en courant continu dont un pôle formant un potentiel de référence est relié à ladite deuxième borne, tandis que le deuxième organe de commutation dudit circuit de détection présente une première borné de puissance reliée à ladite deuxième borne dudit circuit de détection et une seconde borne de puissance reliée à ladite troisième borne dudit circuit de détection et reliée à un premier côté d'une résistance dont le second côté est relié à une cinquième borne dudit circuit de détection prévue pour être connectée à une deuxième pôle positif de ladite alimentation en courant continu ; et éventuellement
- ledit premier organe de commutation desdits éléments de mise en forme est un transistor NPN dont la base forme ladite borne de commande, dont l'émetteur forme ladite première borne de puissance et dont le collecteur forme ladite deuxième borne de puissance ; tandis que ledit deuxième organe de commutation desdits éléments de mise en forme est un transistor MOSFET à canal N dont la grille forme ladite borne de commande, dont la source forme ladite première borne de puissance et dont le drain forme ladite deuxième borne de puissance.

Selon d'autres caractéristiques préférées, pour les mêmes raisons :
- ledit circuit de pilotage dudit étage de puissance comporte une unité logique propre à commander ledit premier organe de commutation et ledit second organe de commutation dudit étage de puissance, laquelle unité logique est reliée à ladite deuxième borne et à ladite troisième borne dudit circuit de détection, lequel circuit de détection est adapté à ce que ledit premier état de la tension entre ladite troisième borne et ladite deuxième borne et ledit deuxième état de cette tension soient un premier état logique et un deuxième état logique; et éventuellement
- ledit premier état logique et ledit deuxième état logique sont des niveaux de tension prédéterminés ; et/ou
- ladite unité logique comporte un programme pour ne réagir à un basculement de l'un à l'autre desdits premier état et deuxième état que si ce basculement est conforme à un critère de stabilité prédéterminé ; et éventuellement
- ledit critère de stabilité prédéterminé est la persistance de l'un desdits premier état et deuxième état pendant un nombre prédéterminé de demi-ondes de tension ; et éventuellement
- ledit nombre prédéterminé est compris entre 15 et 25.

L'appareil selon l'invention convient particulièrement bien pour former un variateur de lumière.

L'invention vise également, sous un deuxième aspect, une installation électrique résidentielle ou tertiaire, caractérisée en ce qu'elle comporte une charge, un appareil tel qu'exposé ci-dessus et un interrupteur avec ladite première borne principale qui est reliée à l'un des pôles d'un réseau d'alimentation en courant alternatif, avec la seconde borne principale dudit appareil qui est reliée à une borne de ladite charge, avec l'autre borne de ladite charge qui est reliée à l'autre pôle dudit réseau d'alimentation en courant alternatif, l'une des bornes dudit interrupteur qui est reliée audit premier pôle dudit réseau électrique d'alimentation en courant alternatif et l'autre borne dudit interrupteur qui est reliée à ladite borne de commande à distance dudit appareil.

Selon des caractéristiques préférées, pour des raisons de simplicité et de commodité de mise en oeuvre, l'installation selon l'invention comporte un premier logement et un deuxième logement recevant respectivement ledit appareil et ledit interrupteur avec ladite première borne de l'interrupteur qui est reliée à ladite première borne principale de l'appareil par un premier câble et avec ladite deuxième borne de l'interrupteur qui est relié à ladite borne de commande à distance par un deuxième câble, lesquels premier câble et deuxième câble cheminent côte à côte.

L'exposé de l'invention sera maintenant poursuivi par la description d'exemples préférés de réalisation, donnée ci-après à titre illustratif et non limitatif, en référence aux dessins annexés. Sur ceux-ci :
- la figure 1 est une représentation schématique d'un circuit comportant, entre les bornes d'un réseau d'alimentation en courant alternatif, une charge, un appareil de variation de la puissance moyenne d'alimentation de cette charge et un interrupteur de commande à distance de cet appareil ;
- la figure 2 est une représentation schématique partielle de l'appareil de variation faisant partie du circuit illustré sur la figure 1 ;
- la figure 3 est un chronogramme montrant comment varie la tension entre le potentiel de référence et une borne de sortie du circuit de détection que comporte l'appareil de variation pour déterminer si l'interrupteur de commande à distance est à l'état ouvert ou à l'état fermé, lorsque la puissance moyenne d'alimentation transmise à la charge est à son maximum ;
- la figure 4 est une représentation schématique d'une variante du circuit de détection effectuant directement la mise en forme du signal représentatif de l'état ouvert ou fermé de l'interrupteur de commande à distance ; -
- la figure 5 est un chronogramme montrant, avec une échelle des temps commune, portée en abscisse, comment varie la tension respectivement entre le potentiel de référence et une ligne joignant les deux transistors du circuit (courbe du haut) et comment varie la tension entre le potentiel de référence et une borne de sortie de ce circuit (courbe du bas) ;
- la figure 6 est une représentation schématique au complet de l'appareil de variation de puissance muni du circuit de détection illustré sur la figure 4 ; et
- la figure 7 est un organigramme montrant comment l'unité logique de l'appareil de variation de puissance illustré sur la figure 6 détermine si l'interrupteur de commande à distance est à l'état ouvert ou à l'état fermé à partir du signal fourni par le circuit de détection.

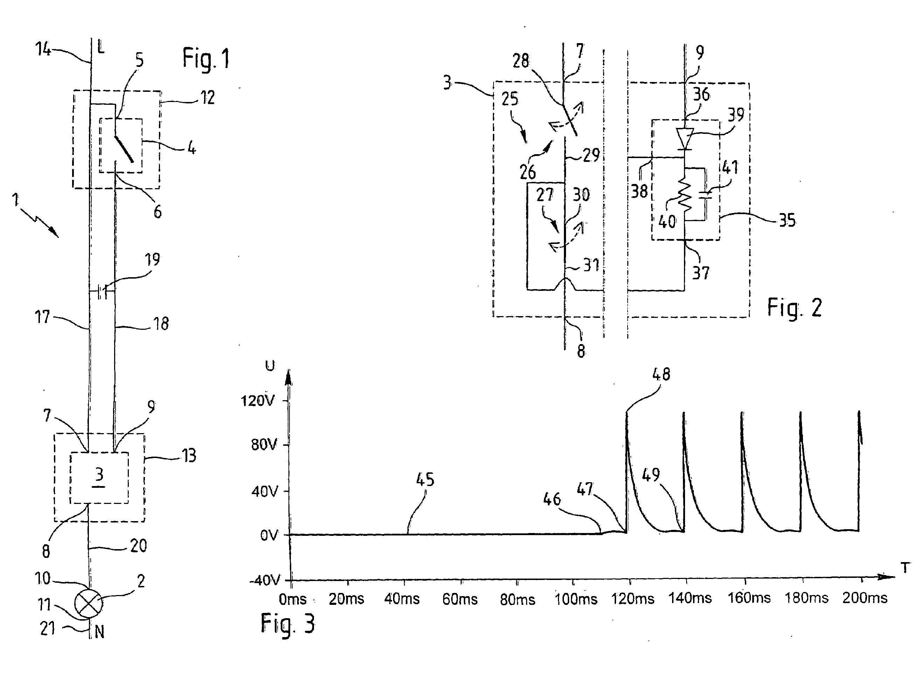

Le circuit électrique 1 illustré sur la figure 1 fait partie d'une installation électrique résidentielle ou tertiaire. Il est disposé entre un pôle de phase L et un pôle de neutre N d'un réseau électrique d'alimentation en courant alternatif présentant ici une tension efficace de 230V et une fréquence de 50 Hz.

Entre le pôle de neutre N et le pôle de phase L, le circuit 1 comporte une charge 2, ici un point lumineux, un appareil 3 de variation de la puissance moyenne d'alimentation de la charge 2 et un interrupteur 4 de commande à distance de l'appareil 3.

L'interrupteur 4 présente deux bornes 5 et 6. Dans la position illustrée, les bornes 5 et 6 sont isolées l'une de l'autre. Dans l'autre position de l'interrupteur 4, les bornes 5 et 6 sont reliées l'une à l'autre.

L'appareil de variation 3 présente deux bornes principales 7 et 8 et une borne de commande à distance 9. L'appareil 3 admet un état éteint où il bloque le passage du courant entre les bornes 7 et 8 et un état allumé où il laisse passer entre les bornes 7 et 8 une puissance moyenne d'alimentation, correspondant ici au niveau d'éclairage du point lumineux 2, fixée par une consigne entrée dans l'appareil 3 par une commande locale non illustrée prévue dans cet appareil.

Cette commande locale comporte ici un bouton rotatif dont la position angulaire fixe la consigne de niveau d'éclairement. Le passage de l'état éteint à l'état allumé ou inversement se fait par appui sur le bouton rotatif de cette commande, à la manière d'un bouton-poussoir.

Pour moduler la puissance moyenne d'alimentation du point lumineux 2, l'appareil 3 comporte entre les bornes 7 et 8 un étage de puissance qui sera décrit en détail plus loin.

On notera pour l'instant que l'étage de puissance est passant, c'est-à-dire autorise la circulation du courant entre les bornes 7 et 8, pendant une partie de chaque demi-onde de tension et est bloqué pendant le reste de celle-ci. Bien entendu, plus est élevée la proportion du temps pendant lequel l'étage de puissance est passant plus est élevée la puissance moyenne d'alimentation.

Dans le circuit illustré sur la figure 1, la borne principale 7 de l'appareil 3 est reliée au pôle de phase L du réseau d'alimentation, la borne 8 est reliée à la borne 10 du point lumineux 2, l'autre borne 11 de ce point lumineux est reliée au pôle de neutre N du réseau électrique d'alimentation, la borne 5 de l'interrupteur 4 est reliée au pôle de phase L de ce réseau et l'autre borne 6 de l'interrupteur 4 est reliée à la borne 9 de commande à distance de l'appareil 3.

L'interrupteur 4 est reçu dans un logement 12 formé par une boîte encastrée dans un mur ou en saillie par rapport à celui-ci. L'appareil 3 est reçu dans un logement 13 similaire.

Un câble électrique 14 est tiré entre le point de connexion au réseau d'alimentation électrique et le logement 12 où il est connecté par son extrémité à la borne 5. Un câble 17 tiré entre le logement 12 et le logement 13 est connecté à une extrémité à la borne 5 et à l'autre extrémité à la borne 7. Le câble 14 sert à relier la borne 5 au pôle de phase L du réseau d'alimentation. Le câble 14 et le câble 17, connectés l'un à l'autre par la borne 5, servent à relier la borne 7 au pôle de phase L.

Entre le logement 12 et le logement 13 est tiré un autre câble 18, connecté à une extrémité à la borne 6 et à l'autre extrémité à la borne 9.

Les câbles 17 et 18 cheminent l'un à côté de l'autre entre les logements 12 et 13. De ce fait, il existe entre les câbles 17 et 18 un couplage capacitif produisant l'effet d'un condensateur 19 dont une borne est connectée au câble 17 et l'autre borne au câble 18.

La liaison entre les bornes 8 et 10 s'effectue par un câble électrique 20 tiré entre le logement 13 et le point lumineux 2 tandis que la liaison entre la borne 11 et le pôle de neutre N s'effectue par un câble électrique 21 tiré entre le point lumineux 2 et le point de connexion au réseau d'alimentation électrique.

Quand l'interrupteur 4 est ouvert, c'est-à-dire quand il isole les bornes 5 et 6 l'une de l'autre (position illustrée sur la figure 1), la borne principale 7 et la borne de commande 9 de l'appareil 3 ne sont pas reliées l'une à l'autre. Quand l'interrupteur 4 est fermé (bornes 5 et 6 reliées l'une à l'autre), les bornes 7 et 9 sont reliées l'une à l'autre.

Ici, pour que l'appareil 3 et l'interrupteur 4 fonctionnent à la manière d'un montage traditionnel à va-et-vient, le basculement de l'appareil 3 entre l'état allumé et l'état éteint est commandé aussi bien par un appui, à la manière d'un bouton-poussoir, sur le bouton rotatif de commande intégré à l'appareil 3 que par le passage de l'interrupteur 4 de l'état ouvert à l'état fermé ou inversement.

On va maintenant décrire plus en détail, à l'appui de la figure 2, l'étage de puissance de l'appareil 3 et le circuit de détection qu'il comporte pour déterminer si les bornes 7 et 9 sont reliées ou non l'une à l'autre.

L'étage de puissance 25 comporte deux organes de commutation électronique 26 et 27 identiques et disposés en série inverse.

L'organe 26 comporte deux bornes de puissance 28 et 29 entre lesquelles il peut autoriser ou interdire une circulation de courant, ainsi qu'illustré par la double flèche en trait interrompu.

Lorsque le potentiel de la borne 28 est supérieur au potentiel de la borne 29, c'est-à-dire lorsque du courant peut circuler de la borne 28 vers la borne 29, l'organe 26 est commandable, par une portion du circuit de pilotage de l'étage de puissance 25 non illustrée sur la figure 2, pour autoriser, dans un état conducteur, une circulation de courant de la borne 28 vers la borne 29 et pour interdire, dans un état bloqué, une telle circulation de courant.

Lorsque le potentiel de la borne 29 est plus élevé que le potentiel de la borne 28, l'organe 26 autorise, sans avoir à être commandé, la circulation du courant de la borne 29 vers la borne 28.

La description qui vient d'être donnée pour l'organe 26 vaut pour l'organe 27, à condition de remplacer dans cette description la borne 28 par la borne 31 et la borne 29 par la borne 30.

La borne 28 de l'organe 26 est reliée à la borne principale 7. La borne 31 de l'organe 27 est reliée à la borne principale 8. Les bornes 29 et 30 respectivement de l'organe 26 et de l'organe 27 sont reliées l'une à l'autre.

Ainsi, lorsque le potentiel de la borne principale 7 est plus élevé que le potentiel de la borne principale 8 (demi-ondes positives), le courant peut passer dans l'étage de puissance de la borne 7 vers la borne 8 lorsque l'organe 26 est commandé en conduction tandis le courant ne peut pas passer lorsque l'organe 26 est commandé en blocage.

De même, lorsque le potentiel de la borne 8 est plus élevé que le potentiel de la borne 7 (demi-ondes négatives), le courant peut passer de la borne 8 vers la borne 7 lorsque l'organe de commutation 27 est commandé en conduction tandis que le courant ne peut pas passer lorsque cet organe est commandé en blocage.

On notera que quand le potentiel de la borne 7 est plus élevé que le potentiel de la borne 8 et que l'organe de commutation 26 est à l'état bloqué, la tension du réseau électrique d'alimentation apparaît entre les bornes 28 et 29.

Le circuit de pilotage de l'étage de puissance 25, et plus précisément une portion de celui-ci non illustrée sur la figure 2, fait prendre à l'organe 26 l'état bloqué à chaque demi-onde de tension où le potentiel de la borne 7 est plus élevé que le potentiel de la borne 8, y compris lorsque l'appareil 3 a comme consigne de fournir à la charge 2 la puissance maximale possible.

Dans un tel cas, la durée pendant laquelle l'organe 26 est à l'état bloqué est extrêmement courte, par exemple 1 ms soit un dixième de la durée d'une demi-onde à la fréquence de 50 Hz.

Ce laps de temps où l'organe 26 est bloqué est nécessaire pour diverses raisons, en particulier pour permettre à l'alimentation en courant continu du circuit de pilotage, disposée en parallèle entre les bornes 28 et 29, de prélever l'énergie requise sur le réseau d'alimentation électrique y compris lorsque la consigne de fonctionnement est à pleine puissance (les moments où l'alimentation électrique prélève de l'énergie sont ceux où l'organe 26 est à l'état bloqué).

On notera encore, à propos de l'alimentation en courant continu du circuit de pilotage de l'étage de puissance 25, que le potentiel de référence de cette alimentation est celui des bornes 29 et 30.

Ainsi, entre le potentiel de référence de l'alimentation en courant continu et la borne de commande à distance 9, se trouvent en série tant l'organe de commutation 26 que l'interrupteur 4.

La détermination de l'existence ou non d'une liaison entre les bornes 7 et 9 s'effectue grâce au circuit de détection 35 qui appartient au circuit de pilotage de l'étage de puissance 25.

Le circuit de détection 35 comporte une borne 36 reliée à la borne 9, une borne 37 reliée à la borne 29 et à la borne 30 ainsi qu'une borne 38 reliée à la partie non illustrée du circuit de pilotage de l'étage de puissance 25.

Entre les bornes 36 et 37 le circuit 35 comporte une diode 39, une résistance 40 et un condensateur 41.

L'anode de la diode 39 est reliée à la borne 36.

La résistance 40 et le condensateur 41 sont disposés en parallèle entre la cathode de la diode 39 et la borne 37. La borne 38 est reliée à la cathode de la diode 39.

Ici, la résistance 40 a une valeur de 330 kΩ et le condensateur 41 une valeur de 10 nF.

Si la résistance 40 était directement disposée entre les bornes 36 et 37, sans que soit prévue une diode telle que 39 et un condensateur tel que 41, cette résistance serait disposée entre la borne 9 et le potentiel de référence de l'alimentation en courant continu.

En l'absence de perturbations (bruits de couplage dus à une capacité telle que 19, effets de champ, phénomènes transitoires, ...), la tension aux bornes de cette résistance serait nulle lorsque l'interrupteur externe 4 est à l'état ouvert et correspondrait à la tension entre les bornes 28 et 29 lorsque l'interrupteur externe 4 est à l'état fermé.

Avec une capacité de couplage de valeur élevée, par exemple de 100 pF, il existerait en outre des variations de tension importantes aux bornes de cette résistance lorsque l'interrupteur externe est à l'état ouvert, à chaque fois que l'organe 26 passe de l'état conducteur à l'état bloqué.

Dans le cas particulièrement défavorable où l'appareil 3 est à pleine puissance, et donc où l'organe 26 est à l'état bloqué pendant une durée extrêmement courte, l'on ne pourrait que difficilement, voire pas du tout, distinguer entre la configuration où l'interrupteur 4 est à l'état ouvert et la configuration où l'interrupteur 4 est à l'état fermé.

La diode 39 permet d'autoriser une circulation de courant de la borne 36 vers la borne 37 et d'interdire une circulation de courant de la borne 37 vers la borne 36.

Cela évite au condensateur 19, après s'être chargé pendant que l'organe 26 est à l'état bloqué jusqu'à ce que la tension existant alors entre les bornes 28 et 29 prenne une valeur de crête, de se décharger lorsqu'ensuite la tension entre les bornes 28 et 29 diminue puis s'annule, et plus généralement lui évite de subir ensuite un cycle de charge/décharge à chaque fois que l'organe 26 passe de l'état conducteur à l'état bloqué.

Le condensateur 41, disposé en parallèle de la résistance 40, produit quant à lui un effet de mémorisation de la valeur de crête atteinte par la tension aux bornes de la résistance 40 (il ne se décharge que progressivement au travers de la résistance 40).

Le fonctionnement du circuit 35 est illustré par la courbe 45 (figure 3), qui représente la tension entre les bornes de la résistance 40 en fonction du temps, et plus précisément la tension entre les bornes 37 et 38 du circuit 35 avec la borne 37 qui est prise comme potentiel de référence et avec l'interrupteur 4 qui passe de l'état ouvert à l'état fermé à l'instant T = 110 ms.

Au point 46 de la courbe 45, qui correspond à cet instant, débute une demi-onde de tension positive, c'est-à-dire une demi-onde de tension où le potentiel de la borne 7 est plus élevé que le potentiel de la borne 8.

La consigne de fonctionnement de l'appareil 3 étant alors la pleine puissance, l'organe 26 reste conducteur jusqu'à l'instant T = 119 ms correspondant au point 47 de la courbe 45.

Entre les points 46 et 47, la courbe 45 varie comme la demi-onde de tension, en raison de la résistance interne de l'organe 26 qui provoque une petite chute de tension entre la borne 28 et la borne 29.

Lorsque l'organe 26 passe de l'état conducteur à l'état bloqué (point 47 de la courbe 45), la tension entre les bornes 28 et 29 devient sensiblement égale à la tension entre les bornes 7 et 8, soit sensiblement la tension instantanée que présente alors le réseau électrique d'alimentation (point 48 de la courbe 45).

Etant donné que l'on est alors quasiment à la fin de la demi-onde de tension, la tension entre les bornes 28 et 29 décroît très rapidement et s'annule au moment du passage à la demi-onde suivante (où le potentiel de la borne 8 est plus élevé que le potentiel de la borne 7) et reste nulle (à la chute de tension due à sa résistance interne près) jusqu'au moment où l'organe 26 passe de nouveau de l'état conducteur à l'état bloqué (point 49).

Cependant, grâce au condensateur 41, la tension entre les bornes 37 et 38 ne chute pas brutalement après sa valeur de crête (point 48) mais décroît progressivement.

Ensuite, tant que l'interrupteur 4 reste fermé, la courbe 45 présente un pic de tension à chaque onde de tension, à chaque fois que l'organe 26 passe de l'état conducteur à l'état bloqué.

Bien entendu, plus la durée des moments où l'organe 26 reste à l'état bloqué est grande, plus la largeur des pics de tension entre les bornes 37 et 38 est importante.

On voit que le signal disponible entre les bornes 37 et 38, illustré par la courbe 45, prend un premier état où il reste nul ou en tout cas quasiment nul lorsque l'interrupteur 4 est à l'état ouvert et prend un deuxième état, dans lequel il existe une succession de pics de tension, lorsque l'interrupteur 4 est à l'état fermé. Ce signal, suivant qu'il prend l'un ou l'autre de ces états, permet donc de déterminer si la borne 7 et la borne 9 sont ou non reliées l'une à l'autre par l'interrupteur externe 4.

On rappelle, comme expliqué ci-dessus, que sans la diode 39, quand l'interrupteur 4 est ouvert, le condensateur de couplage 19 provoquerait, s'il a une valeur élevée, des variations de tension à chaque passage de l'organe 26 de l'état conducteur à l'état bloqué, de sorte qu'il serait plus difficile voire impossible de faire la distinction entre la configuration où l'interrupteur 4 est à l'état ouvert et la configuration où l'interrupteur 4 est à l'état fermé.

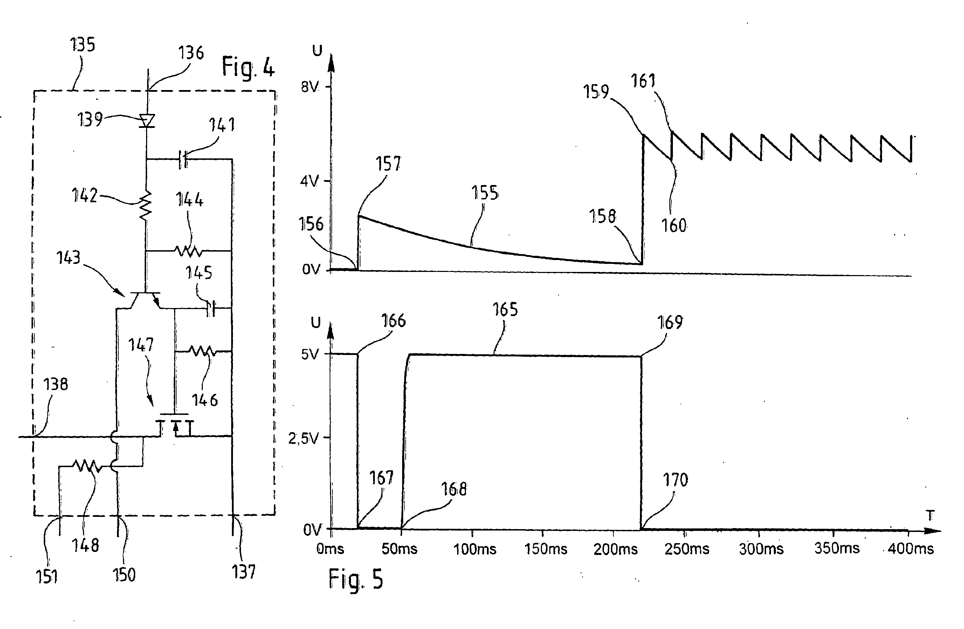

On va maintenant décrire à l'appui de la figure 4 une variante 135 du circuit de détection 35 capable de produire directement un signal logique à deux états. D'une façon générale, on a employé pour les éléments similaires les même références numériques que pour le circuit 35, mais additionnés du chiffre 100.

Le circuit 135 comporte cinq bornes. La borne 136 est reliée à la borne de commande 9 de l'appareil 3. La borne 137 est reliée aux bornes 29 et 30 des organes 26 et 27 et est donc portée au potentiel de référence de l'alimentation en courant continu. La borne 138 est reliée aux divers composants situés entre la borne 136 et la borne 137 pour que la tension entre elle-même et la borne 137 constitue un signal logique à deux états correspondant respectivement à un niveau bas de tension et à un niveau haut de tension.

Le circuit 135 comporte en outre une borne 150 reliée à une borne de l'alimentation en courant continu portée à un premier potentiel, la différence entre le premier potentiel et le potentiel de référence, c'est-à-dire la tension entre la borne 150 et la borne 137, étant ici de 15 V.

Le circuit 135 comporte en outre une borne 151 reliée à une borne de l'alimentation en courant continu portée à un deuxième potentiel, la différence entre le deuxième potentiel et le potentiel de référence, c'est-à-dire la tension entre la borne 151 et la borne 137, étant ici de 5 V.

Ici, un premier état du signal disponible entre les bornes 137 et 138 correspond à un niveau haut de tension, soit 5 V ou à peu près, et le deuxième état au niveau bas de tension, soit 0 V ou à peu près.

Le circuit 135 comporte une diode 139 dont l'anode est reliée à la borne 136. Un condensateur 141 est disposé entre la cathode de la diode 139 et la borne 137. Ici, le condensateur 141 a une valeur de 1 nF.

Une résistance 142 est disposée entre la cathode de la diode 139 et la base du transistor NPN 143. Ici, la résistance 142 a une valeur de 470 kΩ.

Une résistance 144 est disposée entre la base du transistor 143 et la borne 137. Ici, la résistance 144 a une valeur de 33 kΩ.

Un condensateur 145 est disposé entre l'émetteur du transistor 143 et la borne 137. Ici le condensateur 145 a une valeur de 100 nF.

Une résistance 146 est également disposée entre l'émetteur du transistor 143 et la borne 137. Ici, la résistance 146 a une valeur de 1000 kΩ.

L'émetteur du transistor 143 est encore relié à la grille du transistor 147 MOSFET à canal N.

Le collecteur du transistor 143 est relié à la borne 150.

Le drain du transistor 147 est relié à la borne 138 tandis que la source de ce transistor est reliée à la borne 137. Une résistance 148 est disposée entre le drain du transistor 147 et la borne 151. Ici, la résistance 148 a une valeur de 18 kΩ.

La courbe 155 de la figure 5 montre la tension entre le potentiel de référence et la ligne joignant les transistors 143 et 147, c'est-à-dire la différence de potentiel aux bornes notamment du condensateur 145.

Le circuit 1, tel qu'illustré sur la figure 1, c'est-à-dire avec l'interrupteur 4 ouvert, et avec l'appareil 3 qui comporte le circuit de détection 135, est mis sous tension à l'instant T = 20 ms, correspondant au point 156 de la courbe 155.

L'interrupteur 4 étant alors à l'état ouvert tandis que débute une demi-onde de tension positive (potentiel de la phase plus élevé que le potentiel du neutre), la capacité de couplage 19 se charge et un courant circule de la borne 136 vers la borne 137 en passant par les résistances 142 et 144 de sorte que le transistor 143 prend brièvement un état conducteur persistant jusqu'à l'instant correspondant au point 157 de la courbe 155, le condensateur 145 se chargeant alors partiellement.

Entre l'instant T = 20 ms et l'instant T = 220 ms, correspondant au point 158 de la courbe 155, l'interrupteur 4 reste ouvert, il n'y a pas de courant circulant dans les résistances 142 et 144, le transistor 143 reste donc à l'état bloqué et le condensateur 145 se décharge progressivement dans la résistance 146 de sorte que la tension à ses bornes décroît progressivement.

Lorsque, à l'instant T = 220 ms, l'interrupteur 4 passe à l'état fermé, la diode 139 et le condensateur 141, de même que la diode 39 et le condensateur 41 du circuit 35, opèrent une mémorisation de la valeur crête de la tension sur la borne 9, de sorte que le transistor 143 prend un état conducteur (front montant entre le point 158 et le point 159 de la courbe 155), puis repasse à l'état bloqué lorsque la tension entre le potentiel de référence et sa base devient inférieure au seuil de conduction.

Le condensateur 145 se décharge alors lentement jusqu'à l'instant correspondant au point 160 de la courbe 155, où le transistor 143 passe à nouveau à l'état conducteur (moment où l'organe 26 passe à l'état bloqué).

La tension aux bornes du condensateur 145 présente alors un front montant, situé entre le point 160 et le point 161 sur la courbe 155, le condensateur 145 se charge à nouveau, puis le transistor 143 passe à nouveau à l'état bloqué, et le transistor 145 se décharge alors lentement.

Ainsi, la tension aux bornes du condensateur 145 varie entre le niveau correspondant aux points 159 et 161 et le niveau correspondant au point 160, en dents de scie, à la fréquence du réseau, tant que l'interrupteur 4 reste à l'état fermé.

Le condensateur 145 étant disposé entre la grille et la source du transistor 147, ce dernier est à l'état conducteur lorsque la tension aux bornes du condensateur 145 est supérieure au seuil de conduction du transistor 147, qui est ici de l'ordre de 2 V.

Lorsque le transistor 147 est conducteur, la borne 138 est au même potentiel que la borne 137 tandis que lorsque le transistor 147 est bloqué, la borne 138 est au même potentiel que la borne 151 (la différence de potentiel entre la borne 138 et la borne 137 est alors de 5 V).

La courbe 165 de la figure 5 montre la tension entre la borne 138 et la borne 137.

Jusqu'à l'instant T = 20 ms (points 156 et 157 de la courbe 155 et point 166 de la courbe 165), la tension entre la grille et la source du transistor 147 est nulle, ce transistor est donc à l'état bloqué et la tension entre les bornes 138 et 137 est au niveau haut de 5 V.

Lors du passage entre les points 156 et 157 de la courbe 155, le seuil de conduction du transistor 147 est franchi, celui-ci passe à l'état conducteur et la tension entre la borne 138 et la borne 137 passe au niveau bas de 0 V (front descendant entre les points 166 et 167 de la courbe 165).

Ce niveau se maintient jusqu'à ce que la tension aux bornes du condensateur 145 redevienne inférieure au seuil de conduction, ce qui se produit sensiblement à l'instant T = 50 ms (point 168).

Le transistor 147 passe alors à l'état bloqué et reste à cet état jusqu'à l'instant T = 220 ms où l'interrupteur 4 passe à l'état fermé (point 158 de la courbe 155 et point 169 de la courbe 165). Le transistor 147 passe alors à l'état conducteur (point 170 de la courbe 165) et reste ensuite à l'état bloqué tant que la tension aux bornes du condensateur 145 reste supérieure au seuil de conduction du transistor 147.

On voit que le signal disponible entre les bornes 138 et 137 du circuit 135 est un signal logique à deux états correspondant à deux niveaux respectifs de tension, ici un niveau haut de 5 V lorsque l'interrupteur 4 est à l'état ouvert et un niveau bas de 0 V lorsque l'interrupteur 4 est à l'état fermé.

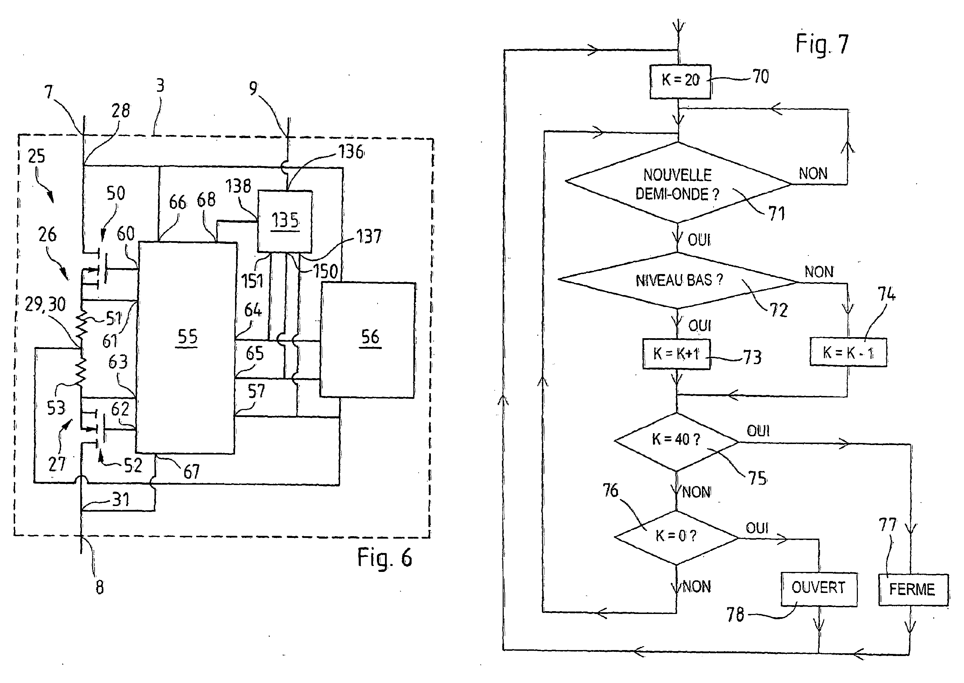

On va maintenant décrire plus en détails, à l'appui de la figure 6, l'appareil 3, dans sa version comportant le circuit de détection 135.

Dans l'étage de puissance 25, l'organe de commutation 26 est formé par un transistor MOSFET à canal N 50 et par une résistance 51 tandis l'organe de commutation 27 est formé par un transistor 52 identique au transistor 50 et par une résistance 53 identique à la résistance 51.

Dans l'organe 26, le drain du transistor 50 correspond à la borne 28 tandis que la résistance 51 est disposée entre la source du transistor 50 et la borne 29.

De même, dans l'organe 27, le drain du transistor 52 correspond à la borne 31 tandis que la résistance 53 est disposée entre la source du transistor 52 et la borne 30.

Le circuit de pilotage de l'étage de puissance 25 comporte une unité logique 55, une alimentation en courant continu 56 et le circuit de détection 135.

En pratique, l'unité logique 55 est un micro-contrôleur.

La grille du transistor 50 est reliée à la borne 60 de l'unité 55, borne prévue pour commander le transistor 50 en conduction ou en blocage.

La résistance 51, du côté de la source du transistor 50, est reliée à la borne 61 de l'unité 55, qui sert à la synchronisation de la commande des transistors 50 et 52.

La grille du transistor 52 est reliée à la borne 62 de l'unité 55, prévue pour commander le transistor 52 en conduction ou en blocage.

La résistance 53, du côté de la source du transistor 52, est reliée à la borne 63 de l'unité 55, qui sert à la synchronisation de la commande des transistors 50 et 52.

L'alimentation en courant continu 56 est reliée aux bornes 28 et 29 pour prélever de l'énergie sur le réseau d'alimentation. La borne 29 est également reliée à la borne 57 de l'unité 55 et à la borne 137 du circuit 135. L'alimentation 56 est capable de produire, par rapport à la borne 29 prise comme potentiel de référence, d'une part une tension de + 5 V, qui est appliquée à l'entrée 64 de l'unité logique 55 et à la borne 151 du circuit 135, et d'autre part une tension de + 15 V, qui est appliquée à la borne 150 du circuit 135 et à l'entrée 65 de l'unité logique, qui sert à celle-ci pour effectuer la commande des transistors 50 et 52.

L'alimentation 56 est par exemple réalisée conformément aux enseignements du brevet français 2 818 459, qui propose une solution pour produire une alimentation en courant continu en n'ayant accès qu'à deux bornes situées de part et d'autre d'un organe de commutation électronique (et non au pôle de phase et au pôle de neutre d'un réseau d'alimentation), en tirant parti du fait que la tension du réseau est présente entre les bornes 28 et 29 quand le transistor 50 est bloqué.

L'unité logique 55 est encore reliée, par sa borne d'entrée 66, à la borne 7, et, par sa borne d'entrée 67, à la borne 8, afin de pouvoir commander les transistors 50 et 52 en synchronisme avec la tension du réseau d'alimentation.

Lorsque le potentiel de la borne 7 est plus élevé que le potentiel de la borne 8, le transistor 50 est conducteur si la tension entre sa grille et sa source est supérieure au seuil de conduction, soit, en pratique, si la tension de la borne 60 de l'unité 55 par rapport à sa borne 57 est supérieure au seuil de conduction ; alors que quand la tension de la borne 60 de l'unité 55 par rapport à sa borne 57 est inférieure au seuil de conduction, le transistor 50 est bloqué.

Ici, l'unité 55 commande le transistor 50 en conduction en portant sa borne 60 à + 15 V par rapport à sa borne 57 tandis qu'elle en commande le blocage en portant sa borne 60 au même potentiel que sa borne 57. Toujours lorsque le potentiel de la borne 7 est plus élevé que le potentiel de la borne 8, et que le transistor 50 est en conduction, la constitution interne du transistor 52 fait que le courant peut toujours circuler au travers de ce transistor.

Au total, lorsque le potentiel de la borne 7 est plus élevé que le potentiel de la borne 8, l'étage 25 est en conduction lorsque l'unité 63 porte sa borne 60 au potentiel de + 15 V par rapport de celui de la borne 57 tandis que l'étage de puissance est bloqué lorsque l'unité 55 porte sa borne 60 au même potentiel que sa borne 57.

De même, lorsque le potentiel de la borne 8 est plus élevé que le potentiel de la borne 7, l'étage de puissance 25 de l'appareil 3 est conducteur lorsque l'unité 55 porte sa borne 62 au potentiel de + 15 V par rapport à sa borne 57 tandis que l'étage de puissance est bloqué lorsque l'unité 55 porte sa borne 62 au même potentiel que sa borne 57.

La synchronisation par rapport aux ondes de tension du réseau s'effectue grâce aux bornes 57, 66 et 67 de l'unité 55 : après le blocage de l'étage de puissance, la tension du réseau est présente entre la borne 57 et la borne 66 ou 67, ce qui permet à l'unité 55 de savoir quand commence une nouvelle demi-onde (moment où la tension passe d'une valeur non nulle à une valeur nulle).

La borne 138 du circuit de détection 135 est reliée à la borne 68 de l'unité logique 55.

Cette dernière peut ainsi déterminer, à partir du signal existant entre sa borne 57 et sa borne 68, si l'interrupteur externe tel que 4 est à l'état ouvert ou à l'état fermé.

Une routine, illustrée sur la figure 7, est prévue dans l'unité 55 pour s'assurer que le niveau haut ou le niveau bas du signal présent entre les bornes 57 et 68 n'est pas dû à une perturbation passagère sur les lignes connectées aux bornes 7 et 9, mais correspond bien à un état stable.

Pour ce faire, il a été choisi de ne considérer qu'un état est stable que si il est conservé pendant au moins vingt demi-ondes successives, soit, à la fréquence de 50 Hz, pendant au moins 200 ms.

Dans une opération 70, un compteur K est initialisé à la valeur 20.

L'on teste ensuite, dans une opération 71, si une nouvelle demi-onde est en train de commencer. Lorsque c'est le cas, l'on teste, dans une opération 72, si le signal entre les bornes 57 et 68 est au niveau haut ou au niveau bas.

Lorsque ce signal est au niveau bas (en principe, interrupteur tel que 4 fermé), le compteur K est incrémenté d'une unité dans une opération 73. En revanche, lorsque le signal n'est pas au niveau bas (en principe, interrupteur tel que 4 à l'état ouvert), le compteur K est diminué d'une unité dans une opération 74.

L'on teste ensuite, respectivement dans une opération 75 et dans une opération 76, si le compteur K a atteint l'une ou l'autre des valeurs 0 et 40. Lorsque la valeur 40 est atteinte, la routine illustrée sur la figure 7 indique au reste de l'unité 55, dans une opération 77, que l'interrupteur externe tel que 4 est à l'état fermé tandis que quand le compteur K a atteint la valeur 0, une opération 78 indique au reste de l'unité 55 que l'interrupteur externe tel que 4 est à l'état ouvert.

Lorsque ni la valeur 0 ni la valeur 40 n'ont été atteintes, l'on retourne à l'opération 71 où l'on attend le début d'une nouvelle demi-onde.

Lorsque l'une ou l'autre des opérations 77 ou 78 a été accomplie, l'on retourne au début de la routine, où l'on réinitialise le compteur K à la valeur 20 dans l'opération 70.

Dans une variante non illustrée, une autre routine est employée pour s'assurer de la stabilité de l'état du signal présent entre les bornes 57 et 68 de l'unité 55, notamment en prévoyant un nombre de demi-ondes différent de 20, par exemple compris entre 15 et 25, ou alors en faisant usage d'un chronomètre interne à l'unité 55 plutôt qu'en comptant des demi-ondes de tension.

On notera qu'il est possible de disposer l'appareil 3 par rapport à l'interrupteur 4 et par rapport à la charge 2 différemment que dans l'installation 1 illustrée sur la figure 1. En particulier, il est possible de laisser l'interrupteur 4 avec sa borne 5 reliée au pôle de phase L du réseau d'alimentation électrique et sa borne 6 reliée à la borne 9, mais avec la borne 7 de l'appareil 3 qui est reliée à la borne 10 de la charge 2 et la borne 8 qui est reliée au pôle de phase L du réseau électrique d'alimentation ; ou alors de disposer l'interrupteur 4 avec sa borne 5 qui est connectée à la borne 9 et sa borne 6 qui est connectée à la borne 10 de la charge 2, soit avec la borne 7 de l'appareil 3 qui est reliée au pôle de phase L et la borne 8 qui est reliée à la borne 10, soit avec la borne 7 qui est reliée à la borne 10 et la borne 8 qui est reliée au pôle de phase L.

Il est en particulier possible de mettre en oeuvre ces variantes de câblage de l'installation 1 avec les logements 12 et 13 et avec les câbles qui y aboutissent. Dans la première variante mentionnée ci-dessus, plutôt que de connecter, dans le logement 13, l'extrémité du câble 17 à la borne 7 et l'extrémité du câble 20 à la borne 8, on connecte l'extrémité du câble 20 à la borne 7 et l'extrémité du câble 17 à la borne 8. Dans les deuxième et troisième variantes mentionnées ci-dessus, l'interrupteur 4 est placé dans le logement 13 plutôt que dans le logement 12 et l'appareil 3 est placé dans le logement 12 plutôt que dans le logement 13, avec, dans le logement 13, l'extrémité du câble 20 et l'extrémité du câble 17 qui sont connectées à la borne 6 tandis que l'extrémité du câble 18 est connectée à la borne 5 et avec, dans le logement 12, la borne 9 qui est connectée à l'extrémité du câble 18, l'extrémité du câble 17 qui est connectée à l'une des bornes 7 et 8 et l'extrémité du câble 14 qui est connectée à l'autre des bornes 7 et 8.

Dans d'autres variantes non représentées, plutôt que de connecter l'une à l'autre les extrémités des câbles 14 et 17 dans le logement 12 grâce à la borne 5 de l'interrupteur 4 ou plutôt que de connecter dans le logement 13 les extrémités des câbles 17 et 20 avec la borne 6 de l'interrupteur 4, un organe séparé de connexion est employé et un câble est disposé entre cet organe de connexion et la borne de l'interrupteur 4 dont il s'agit.

Dans d'autres variantes non illustrées, la charge 2 est différente d'un point lumineux, par exemple un ventilateur électrique, et/ou le réseau électrique auquel est connecté l'installation 1 présente une tension et une fréquence différente, par exemple 110 volts à 60 Hertz.

Dans d'autres variantes non représentées, le circuit de détection comporte des composants différents de ceux des circuits 35 et 135 et/ou est agencé différemment, avec par exemple les transistors MOSFET qui sont remplacés par des transistors IGBT et les deux états de signal présents entre les bornes telles que 37 et 38 ou telles que 137 et 138 sont différents, par exemple avec un niveau de tension qui est bas plutôt que haut lorsque l'interrupteur externe tel que 4 est ouvert et haut plutôt que bas lorsque l'interrupteur externe tel que 4 est fermé ; et/ou un organe autre qu'une diode telle que 39 ou 139 est employée pour n'autoriser le courant à circuler que dans le sens allant de la borne telle que 36 ou de la borne telle que 136 vers la borne telle que 37 ou la borne telle que 137.

## Revendications

1. Appareil de variation de la puissance moyenne d'alimentation d'une charge (2) en courant alternatif, comportant une première borne principale (7), une seconde borne principale (8), un étage de puissance (25) disposé entre ladite première borne principale (7) et ladite seconde borne principale (8) ainsi qu'un circuit de pilotage dudit étage de puissance (25), lequel étage de puissance comporte un premier organe de commutation électronique (26) et un second organe de commutation électronique (27) comportant chacun une première borne de puissance (28, 31) et une seconde borne de puissance (29, 30), chaque dit premier organe de commutation électronique (26) et second organe de commutation électronique (27) étant commandable pour autoriser, dans un état conducteur, une circulation de courant de sa première borne de puissance (28, 31) vers sa seconde borne de puissance (29, 30) et pour interdire, dans un état bloqué, une telle circulation de courant, chaque dit premier organe de commutation électronique (26) et second organe de commutation électronique (27) autorisant, sans avoir à être commandé, une circulation de courant de sa seconde borne de puissance (29, 30) vers sa première borne de puissance (28, 31), la première borne de puissance (28) du premier organe de commutation (26) et ladite première borne principale (7) étant reliées l'une à l'autre, la première borne de puissance (31) du second organe de commutation (27) et ladite seconde borne principale (8) étant reliées l'une à l'autre tandis que la seconde borne de puissance (29) du premier organe de commutation (26) et la seconde borne de puissance (30) du second organe de commutation (27) sont reliées l'une à l'autre ; appareil **caractérisé en ce qu'**il comporte en outre une borne de commande à distance (9) tandis que ledit circuit de pilotage comporte un circuit de détection (35 ; 135) comportant une première borne (36 ; 136) reliée à ladite borne de commande (9), une deuxième borne (37 ; 137) reliée à ladite seconde borne de puissance (29) du premier organe de commutation (26) et à ladite seconde borne de puissance (30) du second organe de commutation (27), des composants (39-41, 139-148), comportant au moins une résistance (40 ; 142, 144), disposés entre ladite première borne (36 ; 136) et ladite deuxième borne (37 ; 137), et une troisième borne (38 ; 138) reliée auxdits composants pour que la tension entre la troisième borne (38 ; 138) et la deuxième borne (37 ; 137) reflète la tension aux bornes de ladite résistance (40 ; 142,144), lesquels composants (39-41 ; 139-148), sans avoir à être commandés autorisent une circulation de courant de la première borne (36 ; 136) vers la deuxième borne (37 ; 137) tandis qu'ils interdisent une circulation de courant de la deuxième borne (37 ; 137) vers la première borne (36 ; 136), avec ledit circuit de pilotage (55, 56, 135) qui fait prendre audit premier organe de commutation (26) ledit état bloqué à chaque demi-onde de tension où le potentiel de la première borne principale (7) est plus élevé que le potentiel de la seconde borne principale (8), grâce à quoi la tension entre la troisième borne (38 ; 138) et la deuxième borne (37 ; 137) prend un premier état dans une première configuration où ladite borne de commande (9) n'est pas reliée à la première borne principale (7) et prend un deuxième état distinct du premier état dans une seconde configuration où ladite borne de commande (9) est reliée à la première borne principale (7).

2. Appareil selon la revendication 1, **caractérisé en ce que** ledit circuit de détection (35 ; 135) comporte une diode (39 ; 139) dont l'anode est du côté de ladite première borne (36 ; 136) et la cathode du côté de ladite deuxième borne (37 ; 137).

3. Appareil selon la revendication 2, **caractérisé en ce que** ledit circuit de détection (35 ; 135) comporte une diode (39 ; 139) et un condensateur (41 ; 141) avec l'anode de ladite diode qui est reliée à ladite première borne (136) et ledit condensateur (41 ; 141) qui est disposé entre la cathode de ladite diode (39 ; 139) et ladite deuxième borne (37 ; 137).

4. Appareil selon la revendication 3, **caractérisé en ce que** ladite résistance (40) et ledit condensateur (41) sont disposés en parallèle entre la cathode de ladite diode (39) et ladite deuxième borne (37) tandis que ladite troisième borne est reliée à la cathode de ladite diode (39).

5. Appareil selon la revendication 3, **caractérisé en ce que** lesdits composants (139-148) comportent, en outre de ladite diode (139), dudit condensateur (141) et de ladite résistance (142, 144), des éléments de mise en forme (143, 145-148) pour que ledit premier état et ledit deuxième état de la tension entre la troisième borne (138) et la deuxième borne (137) correspondent chacun à un niveau de tension prédéterminé.

6. Appareil selon la revendication 5, **caractérisé en ce que** ladite résistance est formée par une première résistance (142) dont un premier côté est relié à la cathode de ladite diode (139) et par une seconde résistance (144) dont un premier côté est relié au deuxième côté de la première résistance (142) et dont un deuxième côté est relié à ladite deuxième borne (137) ; tandis que lesdits éléments de mise en forme comportent un organe de commutation électronique (143) dont une borne de commande est reliée au deuxième côté de ladite première résistance (142) et donc au premier côté de ladite seconde résistance (144).

7. Appareil selon la revendication 6, **caractérisé en ce que** lesdits éléments de mise en forme (143, 145-148) comportent, en outre d'un premier organe de commutation électronique dont une borne de commande est reliée au deuxième côté de la première résistance et donc au premier côté de la seconde résistance, un deuxième organe de commutation électronique (147) dont une borne de commande est reliée à une borne de puissance dudit premier organe de commutation électronique (143).

8. Appareil selon la revendication 7, **caractérisé en ce que** lesdits éléments de mise en forme (143, 145-148) comportent un condensateur (145) et une résistance (146) disposés en parallèle entre ladite borne de commande du deuxième organe de commutation électronique (147) et ladite deuxième borne (137) dudit circuit de détection (135).

9. Appareil selon la revendication 8, **caractérisé en ce que** ledit premier organe de commutation électronique (143) du circuit de détection comporte une seconde borne de puissance reliée à une quatrième borne (150) dudit circuit de détection, prévue pour être raccordée à un premier pôle positif d'une alimentation en courant continu dont un pôle formant un potentiel de référence est relié à ladite deuxième borne (137), tandis que le deuxième organe de commutation (147) dudit circuit de détection (137) présente une première borne de puissance reliée à ladite deuxième borne (137) dudit circuit de détection et une seconde borne de puissance reliée à ladite troisième borne (138) dudit circuit de détection (135) et reliée à un premier côté d'une résistance (148) dont le second côté est relié à une cinquième borne (151) dudit circuit de détection (135) prévue pour être connectée à une deuxième pôle positif de ladite alimentation en courant continu.

10. Appareil selon la revendication 9, **caractérisé en ce que** ledit premier organe de commutation (143) desdits éléments de mise en forme est un transistor NPN (143) dont la base forme ladite borne de commande, dont l'émetteur forme ladite première borne de puissance et dont le collecteur forme ladite deuxième borne de puissance ; tandis que ledit deuxième organe de commutation (147) desdits éléments de mise en forme est un transistor MOSFET à canal N dont la grille forme ladite borne de commande, dont la source forme ladite première borne de puissance et dont le drain forme ladite deuxième borne de puissance.

11. Appareil selon l'une quelconque des revendications 1 à 10, **caractérisé en ce que** ledit circuit de pilotage dudit étage de puissance (25) comporte une unité logique (55) propre à commander ledit premier organe de commutation (26) et ledit second organe de commutation (27) dudit étage de puissance (25), laquelle unité logique (55) est reliée à ladite deuxième borne (137) et à ladite troisième borne (138) dudit circuit de détection (135), lequel circuit de détection (135) est adapté à ce que ledit premier état de la tension entre ladite troisième borne (138) et ladite deuxième borne (137) et ledit deuxième état de cette tension soient un premier état logique et un deuxième état logique.

12. Appareil selon la revendication 11, **caractérisé en ce que** ledit premier état logique et ledit deuxième état logique sont des niveaux de tension prédéterminés.

13. Appareil selon l'une quelconque des revendications 11 ou 12, **caractérisé en ce que** ladite unité logique (55) comporte un programme pour ne réagir à un basculement de l'un à l'autre desdits premier état et deuxième état que si ce basculement est conforme à un critère de stabilité prédéterminé.

14. Appareil selon la revendication 13, **caractérisé en ce que** ledit critère de stabilité prédéterminé est la persistance de l'un desdits premier état et deuxième état pendant un nombre prédéterminé de demi-ondes de tension.

15. Appareil selon la revendication 14, **caractérisé en ce que** ledit nombre prédéterminé est compris entre 15 et 25.

16. Appareil selon l'une quelconque des revendications 1 à 15, **caractérisé en ce qu'**il constitue un variateur de lumière.

17. Installation électrique résidentielle ou tertiaire, **caractérisée en ce qu'**elle comporte une charge (2), un appareil (3) selon l'une quelconque des revendications 1 à 16 et un interrupteur (4), avec ladite première borne principale qui est reliée à l'un des pôles (N, L) d'un réseau d'alimentation en courant alternatif, avec la seconde borne principale (8) dudit appareil qui est reliée à une borne (10) de ladite charge (2), avec l'autre borne (11) de ladite charge (2) qui est reliée à l'autre pôle (N, L) dudit réseau d'alimentation en courant alternatif, l'une des bornes (5) dudit interrupteur qui est reliée audit premier pôle (N, L) dudit réseau électrique d'alimentation en courant alternatif et l'autre borne (6) dudit interrupteur (4) qui est reliée à ladite borne de commande à distance (9) dudit appareil (3).

18. Installation selon la revendication 17, **caractérisée en ce qu'**elle comporte un premier logement (13) et un deuxième logement (14) recevant respectivement ledit appareil (3) et ledit interrupteur (4) avec ladite première borne (5) de l'interrupteur (4) qui est reliée à ladite première borne principale (7) de l'appareil (3) par un premier câble (17) et avec ladite deuxième borne (8) de l'interrupteur (4) qui est relié à ladite borne de commande à distance (9) par un deuxième câble (18), lesquels premier câble (17) et deuxième câble (18) cheminent côte à côte.

## Claims

1. Apparatus for varying the mean supply power of a load (2) with alternating current, comprising a first main terminal (7), a second main terminal (8), a power stage (25) between said first main terminal (7) and said second main terminal (8) and a circuit for pilot control of said power stage (25), which power stage comprises a first electronic switching member (26) and a second electronic switching member (27) each comprising a first power terminal (28, 31) and a second power terminal (29, 30), each said first electronic switching member (26) and second electronic switching member (27) being controllable to enable in a conducting state a flow of current from its first power terminal (28, 31) towards its second power terminal (29, 30) and to prevent in a blocked state such a flow of current, each said first electronic switching member (26) and second electronic switching member (27) enabling without having to be actuated a flow of current from its second power terminal (29, 30) towards its first power terminal (28, 31), the first power terminal (28) of the first switching member (26) and said first main terminal (7) being connected together, the first power terminal (31) of the second switching member (27) and said second main terminal (8) being connected together while the second power terminal (29) of the first switching member (26) and the second power terminal (30) of the second switching member (27) are connected together; the apparatus being **characterised in that** it further comprises a remote control terminal (9) while said pilot control circuit comprises a detection circuit (35; 135) comprising a first terminal (36; 136) connected to said control terminal (9), a second terminal (37; 137) connected to said second power terminal (29) of the first switching member (26) and to said second power terminal (30) of the second switching member (27), components (39-41, 139-148) comprising at least one resistor (40; 142, 144) which are disposed between said first terminal (36; 136) and said second terminal (37; 137), and a third terminal (38; 138), which is connected to said components so that the voltage between the third terminal (38; 138) and the second terminal (37; 137) reflects the voltage at the terminals of said resistor (40; 142, 144), which components (39-41; 139-148) without having to be actuated enable a flow of current from the first terminal (36; 136) towards the second terminal (37; 137) while they prevent a flow of current from the second terminal (37; 137) towards the first terminal (36; 136), with said pilot control circuit (55, 56, 135) which causes said first switching member (26) to assume said blocked state in each voltage half-wave in which the potential of the first main terminal (7) is higher than the potential of the second main terminal (8), whereby the voltage between the third terminal (38; 138) and the second terminal (37; 137) assumes a first state in a first configuration in which said control terminal (9) is not connected to the first main terminal (7) and assumes a second state different from the first state in a second configuration in which said control terminal (9) is connected to the first main terminal (7).

2. Apparatus according to claim 1 **characterised in that** said detection circuit (35; 135) comprises a diode (39; 139), the anode of which is at the side of said first terminal (36; 136) and the cathode of which is at the side of said second terminal (37; 137).

3. Apparatus according to claim 2 **characterised in that** said detection circuit (35; 135) comprises a diode (39; 139) and a capacitor (41; 141) with the anode of said diode which is connected to said first terminal (136) and said capacitor (41; 141) disposed between the cathode of said diode (39; 139) and said second terminal (37; 137).

4. Apparatus according to claim 3 **characterised in that** said resistor (40) and said capacitor (41) are disposed in parallel between the cathode of said diode (39) and said second terminal (37) while said third terminal is connected to the cathode of said diode (39).

5. Apparatus according to claim 3 **characterised in that** said components (139-148), besides said diode (139), said capacitor (141) and said resistor (142, 144), comprise forming elements (143, 145-148) so that said first state and said second state of the voltage between the third terminal (138) and the second terminal (137) each correspond to a predetermined voltage level.

6. Apparatus according to claim 5 **characterised in that** said resistor is formed by a first resistor (142) of which a first side is connected to the cathode of said diode (139) and by a second resistor (144) of which a first side is connected to the second side of the first resistor (142) and of which a second side is connected to said second terminal (137); while said forming elements comprise an electronic switching member (143) of which a control terminal is connected to the second side of said first resistor (142) and therefore to the first side of said second resistor (144).

7. Apparatus according to claim 6 **characterised in that** said forming elements (143, 145-148), besides a first electronic switching member of which a control terminal is connected to the second side of the first resistor and therefore to the first side of the second resistor, comprise a second electronic switching member (147) of which a control terminal is connected to a power terminal of said first electronic switching member (143).

8. Apparatus according to claim 7 **characterised in that** said forming elements (143, 145-148) comprise a capacitor (145) and a resistor (146) disposed in parallel between said control terminal of the second electronic switching member (147) and said second terminal (137) of said detection circuit (135).

9. Apparatus according to claim 8 **characterised in that** said first electronic switching member (143) of the detection circuit comprises a second power terminal connected to a fourth terminal (150) of said detection circuit, which is provided to be connected to a first positive pole of a direct current supply of which a pole forming a reference potential is connected to said second terminal (137) while the second switching member (147) of said detection circuit (137) has a first power terminal connected to said second terminal (137) of said detection circuit and a second power terminal connected to said third terminal (138) of said detection circuit (135) and connected to a first side of a resistor (148) of which the second side is connected to a fifth terminal (151) of said detection circuit (135) which is provided to be connected to a second positive pole of said direct current supply.

10. Apparatus according to claim 9 **characterised in that** said first switching member (143) of said forming elements is an NPN transistor (143), the base of which forms said control terminal, the emitter of which forms said first power terminal and the collector of which forms said second power terminal; while said second switching member (147) of said forming elements is an N-channel MOSFET transistor, the gate of which forms said control terminal, the source of which forms said first power terminal and the drain of which forms said second power terminal.

11. Apparatus according to any one of claims 1 to 10 **characterised in that** said circuit for pilot control of said power stage (25) comprises a logic unit (55) for controlling said first switching member (26) and said second switching member (27) of said power stage (25), which logic unit (55) is connected to said second terminal (137) and to said third terminal (138) of said detection circuit (135), which detection circuit (135) is so adapted that said first state of the voltage between said first terminal (138) and said second terminal (137) and said second state of said voltage is a first logic state and a second logic state.

12. Apparatus according to claim 11 **characterised in that** said first logic state and said second logic state are predetermined voltage levels.

13. Apparatus according to either one of claims 11 and 12 **characterised in that** said logic unit (55) comprises a program for reacting to switching from one of said first and second states to the other only if said switching is in conformity with a predetermined stability criterion.

14. Apparatus according to claim 13 **characterised in that** said predetermined stability criterion is the persistence of said first and second states during a predetermined number of voltage half-waves.

15. Apparatus according to claim 14 **characterised in that** said predetermined number is between 15 and 25.

16. Apparatus according to any one of claims 1 to 15 **characterised in that** it comprises a light dimmer.

17. A residential or tertiary electrical installation **characterised in that** it comprises a load (2), an apparatus (3) according to any one of claims 1 to 16 and a switch (4) with said first main terminal which is connected to one of the poles (N, L) of an alternating current supply network, with the second main terminal (8) of said apparatus which is connected to a terminal (10) of said load (2), with the other terminal (11) of said load (2) which is connected to the other pole (N, L) of said alternating current supply network, one of the terminals (5) of said switch which is connected to the first pole (N, L) of said electrical alternating current supply network and the other terminal (6) of said switch (4) which is connected to said remote control terminal (9) of said apparatus (3).

18. Installation according to claim 17 **characterised in that** it comprises a first housing (13) and a second housing (14) respectively receiving said apparatus (3) and said switch (4) with said first terminal (5) of the switch (4), that is connected to said first main terminal (7) of the apparatus (3) by a first cable (17) and with said second terminal (8) of the switch (4), that is connected to said remote control terminal (9) by a second cable (18), said first cable (17) and said second cable (18) extending side-by-side.

## Patentansprüche

1. Gerät zum Steuern der durchschnittlichen Leistung der Wechselstromversorgung einer Last (2) mit einem ersten Hauptanschluss (7), einem zweiten Hauptanschluss (8), einer zwischen dem ersten Hauptanschluss (7) und dem zweiten Hauptanschluss (8) angeordneten Leistungsstufe (25) sowie einer Schaltung zum Steuern der Leistungsstufe (25), wobei die Leistungsstufe eine erste elektronische Umschalteinrichtung (26) und eine zweite elektronische Umschalteinrichtung (27) umfasst, die jeweils einen ersten Leistungsanschluss (28, 31) und einen zweiten Leistungsanschluss (29, 30) aufweisen, wobei jede erste elektronische Umschalteinrichtung (26) und zweite elektronische Umschalteinrichtung (27) betätigbar ist, um in einem leitenden Zustand eine Stromzirkulation von ihrem ersten Leistungsanschluss (28, 31) zu ihrem zweiten Leistungsanschluss (29, 30) zu gestatten und um in einem Sperrzustand eine derartige Stromzirkulation zu unterbinden, wobei jede erste elektronische Umschalteinrichtung (26) und zweite elektronische Umschalteinrichtung (27) ohne Betätigung eine Stromzirkulation von ihrem zweiten Leistungsanschluss (29, 30) zu ihrem ersten Leistungsanschluss (28, 31) gestatten, wobei der erste Leistungsanschluss (28) der ersten Umschalteinrichtung (26) und der erste Hauptanschluss (7) miteinander verbunden sind, wobei der erste Leistungsanschluss (31) der zweiten Umschalteinrichtung (27) und der zweite Hauptanschluss (8) miteinander verbunden sind, während der zweite Leistungsanschluss (29) der ersten Umschalteinrichtung (26) und der zweite Leistungsanschluss (30) der zweiten Umschalteinrichtung (27) miteinander verbunden sind;
**dadurch gekennzeichnet, dass** das Gerät ferner einen Fernsteuerungsanschluss (9) aufweist, während die Steuerschaltung eine Detektionsschaltung (35; 135) aufweist, die einen mit dem Steuerungsanschluss (9) verbundenen ersten Anschluss (36; 136), einen mit dem zweiten Leistungsanschluss (29) der ersten Umschalteinrichtung (26) und mit dem zweiten Leistungsanschluss (30) der zweiten Umschalteinrichtung (27) verbundenen zweiten Anschluss (37; 137), zwischen dem ersten Anschluss (36; 136) und dem zweiten Anschluss (37; 137) angeordnete Bauelemente (39-41, 139-148) mit wenigstens einem Widerstand (40; 142; 144) und einen mit den Bauelementen verbundenen dritten Anschluss (38; 138) umfasst, damit die Spannung zwischen dem dritten Anschluss (38; 138) und dem zweiten Anschluss (37; 137) die Spannung zu den Anschlüssen des Widerstands (40; 142; 144) reflektiert, wobei die Bauelemente (39-41; 139-148), ohne Betätigung, eine Stromzirkulation vom ersten Anschluss (36; 136) zum zweiten Anschluss (37; 137) gestattet, während sie eine Stromzirkulation vom zweiten Anschluss (37; 137) zum ersten Anschluss (36; 136) unterbinden, wobei die Steuerschaltung (55, 56, 135) die erste Umschalteinrichtung (26) veranlasst, den Sperrzustand bei jeder Spannungshalbwelle einzunehmen, bei der das Potential des ersten Hauptanschlusses (7) höher ist als das Potential des zweiten Hauptanschlusses (8), wodurch die Spannung zwischen dem dritten Anschluss (38; 138) und dem zweiten Anschluss (37; 137) einen ersten Zustand in einer ersten Konfiguration einnimmt, in dem der Steuerungsanschluss (9) nicht mit dem ersten Hauptanschluss (7) verbunden ist, und einen zweiten sich vom ersten Zustand unterscheidenden Zustand in einer zweiten Konfiguration, in dem der Steuerungsanschluss (9) mit dem ersten Hauptanschluss (7) verbunden ist.

2. Gerät nach Anspruch 1,
**dadurch gekennzeichnet, dass** die Detektionsschaltung (35; 135) eine Diode (39; 139) umfasst, deren Anode auf der Seite des ersten Anschlusses (36; 136) und deren Kathode auf der Seite des zweiten Anschlusses (37; 137) liegt.

3. Gerät nach Anspruch 2,
**dadurch gekennzeichnet, dass** die Detektionsschaltung (35; 135) eine Diode (39; 139) und eine Kondensator (41; 141) umfasst, wobei die Anode der Diode mit dem ersten Anschluss (136) verbunden ist und der Kondensator (41; 141) zwischen der Kathode der Diode (39; 139) und dem zweiten Anschluss (37; 137) angeordnet ist.

4. Gerät nach Anspruch 3,
**dadurch gekennzeichnet, dass** der Widerstand (40) und der Kondensator (41) zwischen der Kathode der Diode (39) und dem zweiten Anschluss (37) parallel angeordnet sind, während der dritte Anschluss mit der Kathode der Diode (39) verbunden ist.

5. Gerät nach Anspruch 3,
**dadurch gekennzeichnet, dass** die Bauelemente (139-148) außer der Diode (139), dem Kondensator (141) und dem Widerstand (142, 144) Formungselemente (143, 145-148) aufweisen, damit der erste und der zweite Spannungszustand zwischen dem dritten Anschluss (138) und dem zweiten Anschluss (137) jeweils einem vorbestimmten Spannungsniveau entsprechen.

6. Gerät nach Anspruch 5,
**dadurch gekennzeichnet, dass** der Widerstand von einem ersten Widerstand (142), dessen erste Seite mit der Kathode der Diode (139) verbunden ist, und einem zweiten Widerstand (144) gebildet ist, dessen erste Seite mit der zweiten Seite des ersten Widerstands (142) verbunden ist und dessen zweite Seite mit dem zweiten Anschluss (137) verbunden ist; während die Formungselemente eine elektronische Umschalteinrichtung (143) aufweisen, deren einer Steuerungsanschluss mit der zweiten Seite des ersten Widerstands (142) und folglich mit der ersten Seite des zweiten Widerstands (144) verbunden ist.

7. Gerät nach Anspruch 6,
**dadurch gekennzeichnet, dass** die Formungselemente (143; 145-148) außer einer ersten elektronischen Umschalteinrichtung, deren einer Steuerungsanschluss mit der zweiten Seite des ersten Widerstands und somit mit der ersten Seite des zweiten Widerstands verbunden ist, eine zweite elektronische Umschalteinrichtung (147) umfassen, deren einer Steuerungsanschluss mit einem Leistungsanschluss der ersten elektronischen Umschalteinrichtung (143) verbunden ist.

8. Gerät nach Anspruch 7,
**dadurch gekennzeichnet, dass** die Formungselemente (143, 145-148) einen Kondensator (145) und einen Widerstand (146) umfassen, die zwischen den Steuerungsanschlüssen der zweiten elektronischen Umschalteinrichtung (147) und dem zweiten Anschluss (137) der Detektionsschaltung (135) parallel angeordnet sind.

9. Gerät nach Anspruch 8,
**dadurch gekennzeichnet, dass** die erste elektronischer Umschalteinrichtung (143) der Detektionsschaltung einen zweiten Leistungsanschluss umfasst, der mit einem vierten Anschluss (150) der Detektionsschaltung verbunden ist, der zum Anschließen an einen ersten Pluspol einer Gleichstromversorgung vorgesehen ist, deren einer ein Bezugspotential bildender Pol mit dem zweiten Anschluss (137) verbunden ist, während die zweite Umschalteinrichtung (147) der Detektionsschaltung (137) einen erste Leistungsanschluss aufweist, der mit dem zweiten Anschluss (137) der Detektionsschaltung verbunden ist, und einen zweiten Leistungsanschluss, der mit dem dritten Anschluss (138) der Detektionsschaltung (135) verbunden ist und mit einer ersten Seite eines Widerstands (148), dessen zweite Seite mit einem fünften Anschluss (151) der Detektionsschaltung (135) verbunden ist, der zum Anschließen an einen zweiten Pluspol der Gleichstromversorgung vorgesehen ist.

10. Gerät nach Anspruch 9,
**dadurch gekennzeichnet, dass** die erste Umschalteinrichtung (143) der Formungselemente ein npn-Transistor (143) ist, dessen Basis den Steuerungsanschluss bildet, dessen Emitter den ersten Leistungsanschluss bildet und dessen Kollektor den zweiten Leistungsanschluss bildet; während die zweite Umschalteinrichtung (147) der Formungselemente ein MOSFET-Transistor mit n-Kanal ist, dessen Gate den Steuerungsanschluss bildet, dessen Source den ersten Leistungsanschluss bildet und dessen Drain den zweiten Leistungsanschluss bildet.

11. Gerät nach einem der Ansprüche 1 bis 10,
**dadurch gekennzeichnet, dass** die Steuerschaltung der Leistungsstufe (25) eine logische Einheit (55) umfasst, die die erste Umschalteinrichtung (26) und die zweite Umschalteinrichtung (27) der Leistungsstufe (25) zu steuern vermag, wobei die logische Einheit (55) mit dem zweiten Anschluss (137) und mit dem dritten Anschluss (138) der Detektionsschaltung (135) verbunden ist, wobei die Detektionsschaltung (135) so ausgeführt ist, dass der erste Spannungszustand zwischen dem dritten Anschluss (138) und dem zweiten Anschluss (137) und der zweite Spannungszustand ein erster logischer Zustand und ein zweiter logischer Zustand sind.

12. Gerät nach Anspruch 11,
**dadurch gekennzeichnet, dass** der erste logische Zustand und der zweite logische Zustand vorbestimmte Spannungsniveaus sind.

13. Gerät nach einem der Ansprüche 11 oder 12,
**dadurch gekennzeichnet, dass** die logische Einheit (55) ein Programm umfasst, um auf einen Wechsel vom ersten Zustand und in den zweiten Zustand nur dann zu reagieren, wenn der Wechsel einem vorbestimmten Stabilitätskriterium entspricht.

14. Gerät nach Anspruch 13,
**dadurch gekennzeichnet, dass** das vorbestimmte Stabilitätskriterium das Fortbestehen des ersten Zustands oder des zweiten Zustands während einer vorbestimmten Anzahl von Spannungshalbwellen ist.

15. Gerät nach Anspruch 14,
**dadurch gekennzeichnet, dass** die vorbestimmte Anzahl zwischen 15 und 25 liegt.

16. Gerät nach einem der Ansprüche 1 bis 15,
**dadurch gekennzeichnet, dass** es einen Licht-Dimmer bildet.

17. Elektrische Anlage für den Wohn- oder Geschäftsbereich,
**dadurch gekennzeichnet, dass** sie eine Last (2), ein Gerät (3) nach einem der Ansprüche 1 bis 16 und einen Schalter (4) umfasst, wobei der erste Hauptanschluss mit einem der Pole (N, L) eines Wechselstromversorgungsnetzes verbunden ist, wobei der zweite Hauptanschluss (8) des Geräts mit einem Anschluss (10) der Last (2) verbunden ist, wobei der andere Anschluss (11) der Last (2) mit dem andern Pol (N, L) des Wechselstromversorgungsnetzes verbunden ist, wobei einer der Anschlüssen (5) des Schalters mit dem ersten Pol (N, L) des Wechselstromversorgungsnetzes verbunden ist und der andere Anschluss (6) des Schalters (4) mit dem Fernsteuerungsanschluss (9) des Geräts (3) verbunden ist.

18. Anlage nach Anspruch 17,
**dadurch gekennzeichnet, dass** sie eine erste Aufnahme (13) und eine zweite Aufnahme (14) umfasst, die das Gerät (3) bzw. den Schalter (4) aufnehmen, wobei der erste Anschluss (5) des Schalters (4) mit dem ersten Hauptanschluss (7) des Geräts (3) durch ein erstes Kabel (17) verbunden ist, und der zweite Anschluss (8) des Schalters (4) mit dem Fernsteuerungsanschluss (9) durch ein zweites Kabel (18) verbunden ist, wobei das erste Kabel (17) und das zweite Kabel (18) nebeneinander verlaufen.
